# EUROPÄISCHE PATENTSCHRIFT

(11) **EP 1 759 164 B1**
(45) Veröffentlichungstag und Bekanntmachung des Hinweises auf die Patenterteilung: **23.06.2010**
(21) Anmeldenummer: 05764473.4
(22) Anmeldetag: 01.06.2005
(51) Int. Cl.: G01B 7/00, B60N 2/44, B60N 2/00, B60N 2/07, G01D 5/14

(54) **LÄNGSEINSTELLER FÜR EINEN FAHRZEUGSITZ**
LONGITUDINAL ADJUSTER FOR A VEHICLE SEAT
DISPOSITIF DE REGLAGE LONGITUDINAL POUR UN SIEGE DE VEHICULE

(30) Priorität: 23.06.2004 DE 102004030282
(43) Veröffentlichungstag der Anmeldung: 07.03.2007
(73) Patentinhaber: KEIPER GmbH & Co. KG, 67657 Kaiserslautern (DE)
(72) Erfinder: SCHÜLER, Rolf, 42579 Heiligenhaus (DE); FLICK, Joachim, 42499 Hückeswagen (DE)
(74) Vertreter: Patentanwälte Hosenthien-Held und Dr. Held
(86) Internationale Anmeldenummer: PCT/EP2005/005864
(87) Internationale Veröffentlichungsnummer: WO 2006/000287

(56) Entgegenhaltungen:
- DE-A1- 19 726 675
- FR-A- 2 815 586
- GB-A- 2 369 683
- US-A- 4 909 560
- US-A1- 2004 046 433
- PATENT ABSTRACTS OF JAPAN Bd. 008, Nr. 116 (M-299), 30. Mai 1984 (1984-05-30) & JP 59 023740 A (IKEDA BUTSUSAN KK), 7. Februar 1984 (1984-02-07)
- PATENT ABSTRACTS OF JAPAN Bd. 2000, Nr. 22, 9. März 2001 (2001-03-09) & JP 2001 130369 A (DELTA KOGYO CO LTD), 15. Mai 2001 (2001-05-15)

## Beschreibung

Die Erfindung betrifft einen Längseinsteller für einen Fahrzeugsitz, insbesondere für einen Kraftfahrzeugsitz, mit den Merkmalen des Oberbegriffs des Anspruches 1.

Ein Längseinsteller dieser Art ist aus der DE 197 26 675 A1 bekannt. Ein mechanischer Sensor stellt die Position einer Verriegelungsklaue der Verriegelungsvorrichtung fest, womit der Verriegelungszustand anzeigbar ist. Bei Längseinstellern ist es beispielsweise auch bekannt, durch Laufräder oder dergleichen die Relativverschiebung der Sitzschienen zu erfassen und hieraus die momentane Sitzlängsposition zu ermitteln. In der JP 59-023740 A wird hierfür ein gestreiftes, reflektierendes Band vorgeschlagen, da an der ersten Sitzschiene angebracht ist. Die US 4,909,560 A offenbart ein ähnliches Band mit einem magnetischen Streifenmuster. Die Erkennung der Endposition mittels einer eisernen Klammer an der ersten Sitzschiene und eines magnetischen Sensors an der zweiten Sitzschiene zeigt die US 2004/0046433 A1.

Der Erfindung liegt die Aufgabe zu Grunde, einen Längseinsteller der eingangs genannten Art zu verbessern. Diese Aufgabe wird erfindungsgemäß durch einen Längseinsteller mit den Merkmalen des Anspruches 1 gelöst. Vorteilhafte Ausgestaltungen sind Gegenstand der Unteransprüche.

Indem der Sensor mit der Verriegelungsreihe zusammenwirkt, d.h. die Verriegelungsreihe außer ihrer Verriegelungsfunktion eine weitere Funktion (Positionserkennung) erhält, reduziert sich die Anzahl der notwendigen Bauteile für die Positionserkennungseinrichtung. Dies vereinfacht die Herstellung des Längseinstellers und reduziert die Kosten. Der Sensor ist auf die sich wiederholende Abfolge der (vorzugsweise zwei) verschiedenen, regelmäßig angeordneten Elemente, d.h. Abschnitte, der Verriegelungsreihe empfindlich, welche sich durch die Relativbewegung der Sitzschienen ergibt.

Der Sensor ist vorzugsweise an einem speziellen Halter an der zweiten Sitzschiene angeordnet und durch eine Öffnung oder dergleichen auf die Verriegelungsreihe ausgerichtet. Die Elemente, deren Abfolge vom Sensor erkannt wird, sind identisch mit den für die Verriegelungsfunktion notwendigen Elemente, z.B. Rasten. Die Kosten für die Positionserkennungseinrichtung können weiter reduziert werden durch die Verwendung eines Hall-Sensors, wobei auch optische Sensoren eingesetzt werden können.

Der erfindungsgemäße Längseinsteller kann für alle Fahrzeugsitze eingesetzt werden, bei denen die Information über die Sitzlängsposition ausgewertet wird, wofür der Sensor in an sich bekannter Weise an ein Steuergerät angeschlossen ist.

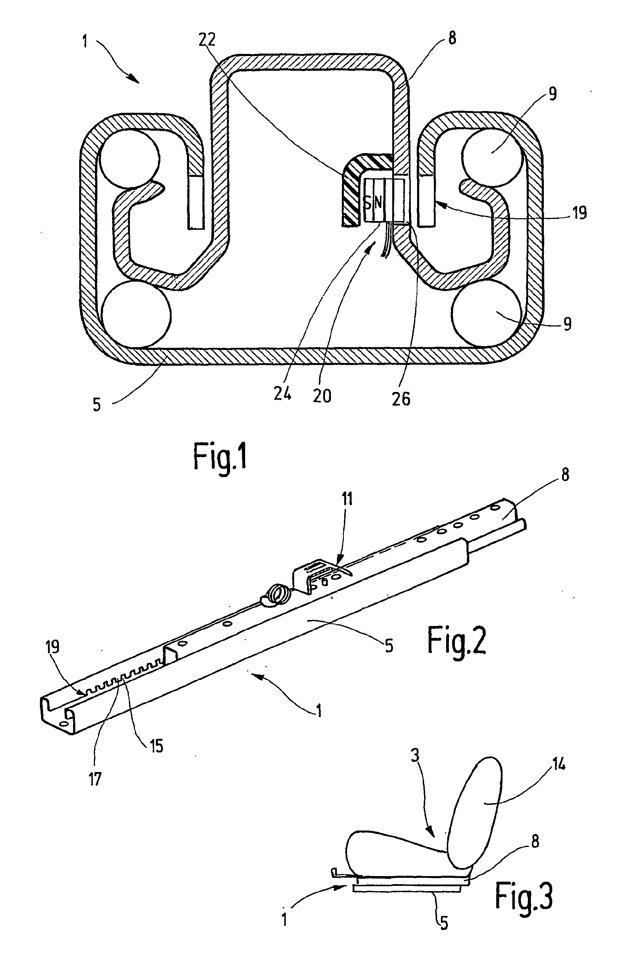

Im folgenden ist die Erfindung anhand eines in der Zeichnung dargestellten Ausführungsbeispiels näher erläutert. Es zeigen
- Fig. 1: einen Schnitt durch ein Paar von Sitzschienen des Längseinstellers,
- Fig. 2: eine perpektivische Ansicht eines Paares von Sitzschienen des Längseinstel- lers, und
- Fig. 3: eine schematische Darstellung eines Fahrzeugsitzes.

Ein Längseinsteller 1 für einen Fahrzeugsitz 3 eines Kraftfahrzeuges weist auf jeder Fahrzeugsitzseite eine mit der Fahrzeugstruktur des Kraftfahrzeuges zu verbindende erste Sitzschiene 5 und eine mit der Sitzstruktur des Fahrzeugsitzes 3 verbundene zweite Sitzschiene 8 auf. Die als Gleitschiene dienende zweite Sitzschiene 8 ist unter Zwischenlage von Kugeln 9 längsverschieblich in der als Führungsschiene dienenden ersten Sitzschiene 5 geführt. Beide Sitzschienen 5 und 8 weisen ein Profil mit einer im wesentlichen U-förmigen Grundform mit umgebogenen Randbereichen auf, wobei die Randbereiche der ersten Sitzschiene 5 nach innen und diejenigen der zweiten Sitzschiene 8 nach außen gebogen sind. Die einander zugewandten Profile der beiden Sitzschienen 5 und 8 hintergreifen einander wechselseitig mit den Randbereichen.

Für den Sitzgebrauch wird der Längseinsteller 1 verriegelt durch eine Verriegelungsvorrichtung 11 je Paar von Sitzschienen 5 und 8. Durch ein gemeinsames Entriegeln der Verriegelungsvorichtungen 11 sind die zweiten Sitzschienen 8 relativ zu den ersten Sitzschienen 5 verschiebbar und damit die Sitzlängsposition des Fahrzeugsitzes 1 einstellbar. Dabei kann es sich um eine gewöhnliche Längseinstellung, bei der die Endposition der Einstellbewegung beibehalten werden soll, oder um einen Teil einer Freischwenkbewegung handeln, bei der die Lehne 14 des Fahrzeugsitzes 3 vorgeklappt und dann der Fahrzeugsitz 3 als ganzes vorgeschoben wird, um den Zugang zu einer hinteren Sitzreihe zu erleichtern, worauf anschließend der Fahrzeugsitz 3 und seine Lehne 14 wieder in die Ausgangspositionen gebracht werden.

Die Verriegelungsvorrichtung 11 weist eine in der zweiten Sitzschiene 8 beweglich gelagerte und federbelastete Rastplatte mit mehreren Rastzähnen auf, die mit einer gleichmäßen Reihe von Rasten 15 und Stegen 17 der ersten Sitzschiene 5 zusammenwirkt, welche regelmäßig angeordnet sind, sich in wiederholender Abfolge abwechseln und im folgenden als Verriegelungsreihe 19 bezeichnet sind. Vorliegend ist die Verriegelungsreihe 19 als eine nach unten offene Zahnreihe in dem innen liegenden Randbereich der ersten Sitzschiene 5 ausgebildet. Es könnte sich aber auch um eine Reihe von Fenstern oder andere Lochbildern handeln. Statt der Rastplatte können in abgewandelter Ausführung auch einzelne Rastbolzen, mehrere Rastplatten oder sonstige Rastelemente vorgesehen sein.

Eine der zweiten Sitzschiene 8 zugeordnete Positionserkenneinrichtung 20 ist vorliegend im Bereich der Verriegelungsvorrichtung 11 im Inneren der zweiten Sitzsitzschiene 8 angeordnet. An der zweiten Sitzschiene 8 ist ein Sensorhalter 22 aus Kunststoff angebracht, der alternativ aus dem Material der zweiten Sitzschiene 8 ausgestellt sein könnte und dann auch eine Abschirmwirkung hat. Der Sensorhalter 22 trägt einen Sensor 24, vorliegend einen Hall-Sensor mit zugeordnetem Magneten, welcher durch eine seitliche Öffnung 26 in der zweiten Sitzschiene 8 hindurch auf die Verriegelungsreihe 19 gerichtet ist. In abgewandelter Ausführung könnte auch ein optischer Sensor verwendet werden.

Die Verriegelungsreihe 19 dient als Impulsgeber für den Sensor 24, d.h. bei einer Längseinstellung entsteht durch die sich wiederholende Abfolge von Rasten 15 und Stegen 17, die relativ zum Sensor 24 vorbeigeführt werden, d.h. durch den sich ständig wiederholenden, regelmäßigen Wechsel Nichtmetall/Metall und umgekehrt (bzw. unterschiedliche Reflexionen im Falle eines optischen Sensors), auf an sich bekannte Weise ein Signal im Sensor 24, welches dieser an ein Steuergerät weiterleitet. Ausgehend von einer Initialisierung (Kalibrierung) in einer ausgezeichneten Position, beispielsweise in der hintersten möglichen Sitzlängsposition, kann so inkrementell, d.h. durch Abzählen oder Aufsummieren der Einzelsignale, die aktuelle Sitzlängsposition erkannt werden. Dies kann beispielsweise für eine Memorysierung bei der oben beschriebenen Freischwenkbewegung oder eine Airbagsteuerung verwendet werden.

### Bezugszeichenliste

- 1: Längseinsteller
- 3: Fahrzeugsitz
- 5: erste Sitzschiene
- 8: zweite Sitzschiene
- 9: Kugel
- 11: Verriegelungsvorrichtung
- 14: Lehne
- 15: Raste
- 17: Steg
- 19: Verriegelungsreihe
- 20: Positionserkennungseinrichtung
- 22: Sensorhalter
- 24: Sensor
- 26: Öffnung

## Patentansprüche

1. Längseinsteller für einen Fahrzeugsitz, insbesondere für einen Kraftfahrzeugsitz, mit wenigstens einer ersten Sitzschiene (5), wenigstens einer relativ zur ersten Sitzschiene (5) verschieblichen und in dieser geführten zweiten Sitzschiene (8), wenigstens einer Veriegelungsvorrichtung (11) zum Verriegeln der ersten Sitzschiene (5) mit der zweiten Sitzschiene (8), wobei der Verriegelungsvorrichtung (11) eine Verriegelungsreihe (19) der ersten Sitzschiene (5) zugeordnet ist, und einer Positionserkennungseinrichtung (20) mit einem Sensor (24), der an der zweiten Sitzschiene (8) angeordnet ist, **dadurch gekennzeichnet, dass** der Sensor (24) auf die sich durch die Relativbewegung der Sitzschienen (5, 8) ergebende, sich wiederholende Abfolge von verschiedenen, regelmäßig angeordneten Elementen (15, 17) der Verriegelungsreihe (19) empfindlich ist, wobei ein Vorbeiführen des mit der Verriegelungsreihe (19) zusammenwirkenden Sensors (24) an der Verriegelungsreihe (19) ein Signal im Sensor (24) ergibt.

2. Längseinsteller nach Anspruch 1, **dadurch gekennzeichnet, dass** als Elemente der Verriegelungsreihe (19) regelmäßig angeordnete Rasten (15) und Stege (17) vorgesehen sind.

3. Längseinsteller nach Anspruch 1 oder 2, **dadurch gekennzeichnet, dass** zur Halterung des Sensors (24) an der zweiten Sitzschiene (8) ein Sensorhalter (22) angebracht ist, welcher insbesondere aus Kunststoff besteht.

4. Längseinsteller nach einem der vorhergehenden Ansprüche, **dadurch gekennzeichnet, dass** der Sensor (24) durch eine Öffnung (26) in der zweiten Sitzschiene (8) hindurch auf die Verriegelungsreihe (19) gerichtet ist.

5. Längseinsteller nach einem der Ansprüche 1 bis 4, **dadurch gekennzeichnet, dass** der Sensor (24) einen Hall-Sensor umfasst.

6. Längseinsteller nach einem der Ansprüche 1 bis 4, **dadurch gekennzeichnet, dass** der Sensor (24) einen optischen Sensor umfasst.

7. Fahrzeugsitz, insbesondere Kraftfahrzeugsitz, **gekennzeichnet durch** einen Längseinsteller nach einem der vorhergehenden Ansprüche.

## Claims

1. A longitudinal adjuster for a vehicle seat, particularly for a motor vehicle seat, with at least one first seat rail (5), at least one second seat rail (8) that is displaceable relative to the first seat rail (5) and is guided in it, at least one locking device (11) for locking the first seat rail (5) with the second seat rail (8), wherein a locking row (19) of the first seat rail (5) is assigned to the locking device (11), and with a position recognition device (20) having a sensor (24) which is arranged at the second seat rail (8), **characterized in that** the sensor (24) interacts with the repeated sequence of different, regularly arranged elements (15, 17) of the locking row (19), which sequence results from the relative movement of the seat rails (5,8), wherein the sensor (24) produces a signal in response to the sensor (24), which interacts with the locking row (19), being moved along the locking row (19).

2. The longitudinal adjuster according to claim 1, **characterized in that** uniformly arranged notches (15) and bars (17) are provided as elements of the locking row (19).

3. The longitudinal adjuster according to claim 1 or 2, **characterized in that,** for holding the sensor (24), a sensor holder (22) is arranged on the second seat rail (8), which sensor holder is particularly made of plastic material.

4. The longitudinal adjuster according to one of the preceding claims, **characterized in that** the sensor (24) is directed at the locking row (19) through an opening (26) in the second seat rail (8).

5. The longitudinal adjuster according to one of claims 1 to 4, **characterized in that** the sensor (24) comprises a Hall sensor.

6. The longitudinal adjuster according to one of claims 1 to 4, **characterized in that** the sensor (24) comprises an optical sensor.

7. The vehicle seat, particularly a motor vehicle seat, **characterized by** a longitudinal adjuster according to any of the preceding claims.

## Revendications

1. Dispositif de réglage longitudinal pour un siège de véhicule, en particulier pour un siège de véhicule automobile, avec au moins un premier rail de siège (5), au moins un deuxième rail de siège (8) mobile par rapport au premier rail de siège (5) et guidé dans celui-ci, au moins un dispositif de verrouillage (11) pour le verrouillage du premier rail de siège (5) avec le deuxième rail de siège (8), le dispositif de verrouillage (11) étant associé à une rangée de verrouillage (19) du premier rail de siège (5), et un dispositif de reconnaissance de position (20) avec un capteur (24) qui est disposé sur le deuxième rail de siège (8), **caractérisé par le fait que** le capteur (24) est sensible à la séquence se répétant, produite par le mouvement relatif des rails de siège (5, 8), se différents éléments (15, 17) disposés régulièrement de la rangée de verrouillage (19), un passage du capteur (24) coopérant avec la rangée de verrouillage (19) au niveau de la rangée de verrouillage (19) produit un signal dans le capteur(24).

2. Dispositif de réglage longitudinal selon la revendication 1, **caractérisé par le fait que**, comme éléments de la rangée de verrouillage (19), sont prévus des crans (15) et des tiges (17).

3. Dispositif de réglage longitudinal selon l'une des revendications 1 ou 2, **caractérisé par le fait que** pour le maintien du capteur (24), un porte-capteur (22) est appliqué sur le deuxième rail de siège (8), lequel est réalisé en particulier en matière plastique.

4. Dispositif de réglage longitudinal selon l'une des revendications précédentes, **caractérisé par le fait que** le capteur (24) est dirigé à travers une ouverture (26) dans le deuxième rail de siège (8) sur la rangée de verrouillage (19).

5. Dispositif de réglage longitudinal selon l'une des revendications 1 à 4, **caractérisé par le fait que** le capteur (24) comprend un capteur à effet Hall.

6. Dispositif de réglage longitudinal selon l'une des revendications 1 à 4, **caractérisé par le fait que** le capteur (24) comprend un capteur optique.

7. Siège de véhicule, en particulier siège de véhicule automobile, **caractérisé par** un dispositif de réglage longitudinal tel que défini à l'une des revendications précédentes.
